# EUROPEAN PATENT APPLICATION

(11) **EP 4 210 154 A1**
(43) Date of publication of application: **12.07.2023**
(21) Application number: 22798989.4
(22) Date of filing: 15.03.2022
(51) Int. Cl.: H01M 10/6556, H01M 10/6567, H01M 10/6551, H01M 50/211

(54) **BATTERY PACK AND DEVICE COMPRISING SAME**

(30) Priority: 07.05.2021 KR 20210059156
(71) Applicant: LG Energy Solution, Ltd., Seoul 07335 (KR)
(72) Inventor: JANG, Byung Do, Daejeon 34122 (KR); LEE, Hyoungsuk, Daejeon 34122 (KR); CHUN, Yongho, Daejeon 34122 (KR)
(74) Representative: Goddar, Heinz J.
(86) International application number: PCT/KR2022/003579
(87) International publication number: WO 2022/234943

(57) **Abstract**

A battery pack according to one embodiment of the present disclosure includes a battery module that includes a battery cell stack in which a plurality of battery cells are stacked, a module frame that houses the battery cell stack and a heat sink located below the module frame; a pack refrigerant pipe through which a refrigerant flows; a cooling port that is connected to a through hole formed in the heat sink; and a cooling connector that connects the pack refrigerant pipe and the cooling port, wherein the cooling port includes an inclination part formed on an outer peripheral surface of the cooling port, wherein a width in a horizontal direction of the inclination part becomes narrowed as it goes in the direction in which the cooling connector is located, and wherein a ring-shaped sealing member is located between the inclination part and the cooling connector.

## Description

### [TECHNICAL FIELD]

### Cross Citation with Related Application(s)

This application claims the benefit of Korean Patent Application No. 10-2021-0059156 filed on May 7, 2021 with the Korean Intellectual Property Office, the entire contents of which are incorporated herein by reference.

The present disclosure relates to a battery pack and a device including the same, and more particularly, to a battery pack having enhanced assembling properties of a cooling structure, and a device including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are arranged with a separator being interposed between them, and a battery case which seals and houses the electrode assembly together with an electrolytic solution.

Generally, the lithium secondary battery may be classified based on the shape of the exterior material into a can-type secondary battery in which the electrode assembly is mounted in a metal can, and a pouch-type secondary battery in which the electrode assembly is mounted in a pouch of an aluminum laminate sheet.

In the case of a secondary battery used for small-sized devices, two to three battery cells are arranged, but in the case of a secondary battery used for a middle- or large-sized device such as an automobile, a battery module in which a large number of battery cells are electrically connected is used. In such a battery module, a large number of battery cells are connected to each other in series or parallel to form a cell assembly, thereby improving capacity and output. One or more battery modules can be mounted together with various control and protection systems such as a BMS (battery management system) and a cooling system to form a battery pack.

When the temperature of the secondary battery rises higher than an appropriate temperature, the performance of the secondary battery may be deteriorated, and in the worst case, there is also a risk of an explosion or ignition. In particular, a large number of secondary batteries, that is, a battery module or a battery pack having battery cells, can add up the heat generated from the large number of battery cells in a narrow space, so that the temperature can rise more quickly and excessively. In other words, a battery module in which a large number of battery cells are stacked, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a middle- or large-sized battery module included in a vehicle battery pack, it is frequently exposed to direct sunlight and may be placed under high-temperature conditions such as summer or desert areas.

Therefore, when configuring a battery module or a battery pack, it may be very important to secure stable and effective cooling performance. Particularly, in recent years, as the capacity of the battery module or battery pack increases, the amount of heat generation increases, and a water-cooling type cooling structure rather than an air-cooling type is required to control the increased amount of heat generation. In the case of the water-cooling type cooling structure, it is excellent in cooling performance, but it is essential to have a sealed structure that prevents the cooling water from flowing out to the electrical components inside the battery pack.

Along with a continuous demand for increased battery pack capacity and improved heat dissipation performance, it is practically necessary to develop a battery pack having a cooling system with a stable sealed structure.

### [DETAILED DESCRIPTION OF THE INVENTION]

### [Technical Problem]

It is an object of the present disclosure to provide a battery pack having improved sealing properties for preventing leakage of the refrigerant in the water-cooling type cooling structure and improved assembly properties in the process of realizing the cooling structure.

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery pack comprising: a battery module that includes a battery cell stack in which a plurality of battery cells are stacked, a module frame that houses the battery cell stack and a heat sink located below the module frame; a pack refrigerant pipe through which a refrigerant flows; a cooling port that is connected to a through hole formed in the heat sink; and a cooling connector that connects the pack refrigerant pipe and the cooling port, wherein the cooling port includes an inclination part formed on an outer peripheral surface of the cooling port, wherein a width in a horizontal direction of the inclination part becomes narrowed as it goes in the direction in which the cooling connector is located, and wherein a ring-shaped sealing member is located between the inclination part and the cooling connector.

The inclination part may have a truncated cone-shaped inclined surface.

The cooling connector may include an opening into which the cooling port and the sealing member are inserted.

The sealing member may be located between the inner surface of the opening and the outer peripheral surface of the inclination part.

The opening may include an inclination passage part with which the sealing member contacts.

The inclination passage part may become smaller in inner diameter as it goes toward the lower side so as to correspond to the inclination part.

The sealing member may be located between the inner surface of the inclination passage part and the outer peripheral surface of the inclination part.

The through hole may include an inlet port and an outlet port, and the cooling port is configured in plural numbers, and may be connected to the inlet port and the outlet port, respectively.

The pack refrigerant pipe may include a pack refrigerant supply pipe and a pack refrigerant discharge pipe.

The cooling connector may be configured in plural numbers to be connected to the cooling ports, respectively, and the refrigerant flowing along the pack refrigerant supply pipe may pass through one of the cooling connectors, one of the cooling ports, and the inlet port to be flowed into the heat sink.

The refrigerant may pass through the outlet port, the other one of the cooling ports, and the other one of the cooling connectors to be discharged to the pack refrigerant discharge pipe.

The heat sink may include a lower plate joined to the bottom part of the module frame and a depressed part recessed downward from the lower plate.

The through hole may be formed in the depressed part.

The refrigerant may flow between the bottom part and the depressed part.

### [Advantageous Effects]

According to embodiments of the present disclosure, a cooling port having an inclined surface is applied in the refrigerant circulation structure between the battery module and the pack refrigerant pipe, thereby capable of improving sealing properties and assembling properties.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view showing a battery pack according to one embodiment of the present disclosure;
Fig. 2 is an exploded perspective view of a battery module included in the battery pack of Fig. 1;
Fig. 3 is a perspective view showing a battery cell according to one embodiment of the present disclosure;
Fig. 4 is a perspective view showing a heat sink included in the battery module of Fig. 2;
Fig. 5 is a cross-sectional view showing a cross section taken along the cutting line B-B' of Fig. 4;
Fig. 6 is a partial perspective view which enlarges and shows a section "A" of Fig. 1;
Fig. 7 is a perspective view showing a cooling port and a sealing member shown in Fig. 6;
Figs. 8 and 9 are cross-sectional views taken along the cutting line C-C' of Fig. 6;
Fig. 10 is a perspective view of a battery module having a cooling port with a vertical sealing structure according to a comparative example of the present disclosure;
Figs. 11(a) and (b) are a perspective view and a cross-sectional view which show a connection form between a cooling port having a vertical sealing structure and a cooling connector according to a comparative example of the present disclosure;
Fig, 12 is a perspective view of a battery module having a heat sink with a horizontal sealing structure according to a comparative example of the present disclosure;
Fig. 13 is a cross-sectional view showing a cross section taken along the cutting line E-E' of Fig. 12;
Fig. 14 is a cross-sectional view which schematically shows a state in which a cooling port is inserted into a cooling connector according to an embodiment of the present disclosure;
Fig. 15 is a plan view showing the battery pack of Fig. 1 as viewed along the -y axis on the xz plane; and
Fig. 16 is a partial cross-sectional view showing a part of the cross section taken along the cutting line D-D' of Fig. 15.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

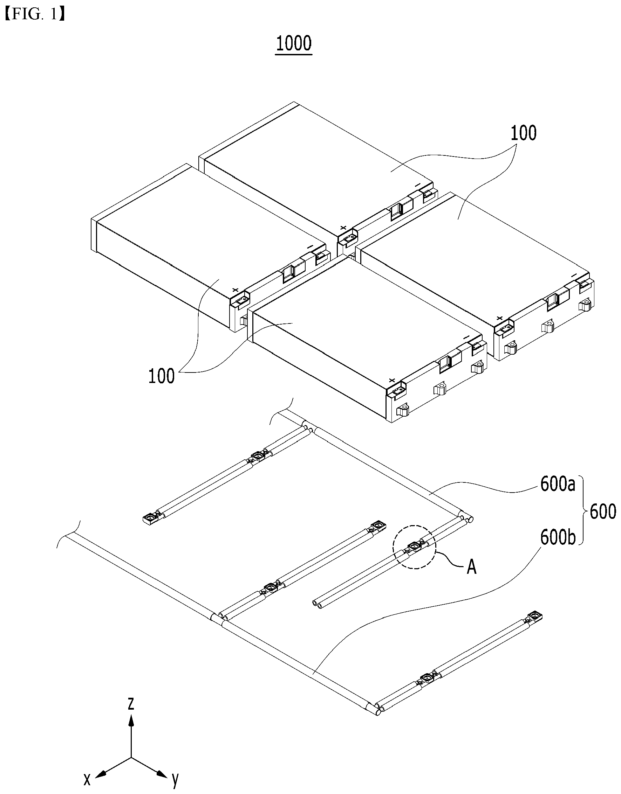

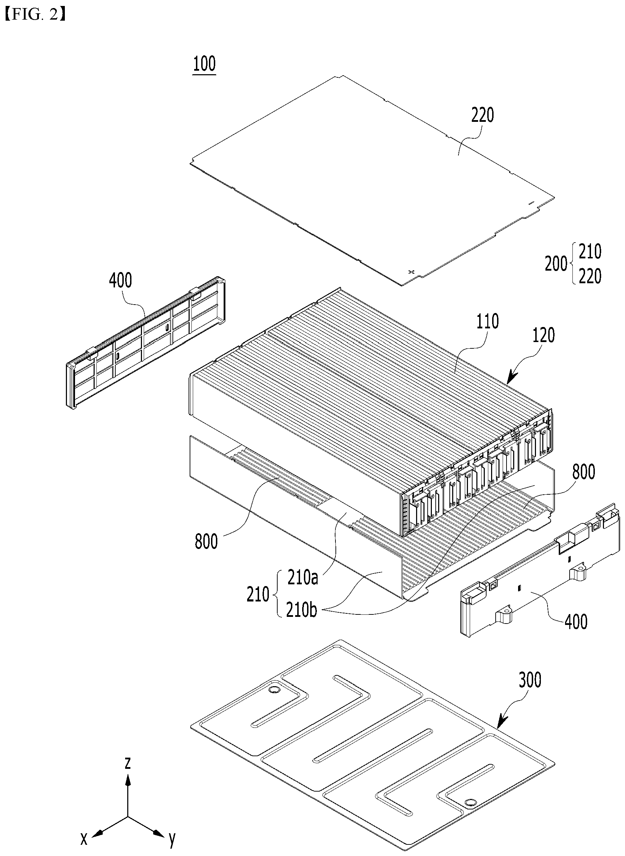

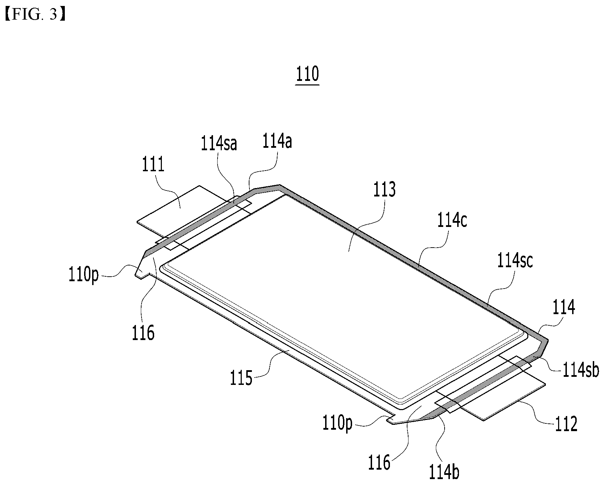

Fig. 1 is an exploded perspective view showing a battery pack according to one embodiment of the present disclosure. Fig. 2 is an exploded perspective view of a battery module included in the battery pack of Fig. 1. Fig. 3 is a perspective view showing a battery cell according to one embodiment of the present disclosure.

Referring to Figs. 1 to 3, the battery pack 1000 according to one embodiment of the present disclosure includes a battery module 100 and a pack refrigerant pipe 600. The battery module 100 may be configured in plural numbers. In one example, in Fig. 1, a state in which four battery modules 100 are arranged is shown. Further, although not specifically illustrated, the battery pack according to the present embodiment may include a pack frame in which the battery modules 100 and the pack refrigerant pipe 600 are housed.

First, the battery module 100 according to the present embodiment includes a battery cell stack 120 in which a plurality of battery cells 110 are stacked, a module frame 200 that houses the battery cell stack 120, and a heat sink 300 located under the module frame.

The battery cell 110 according to the present embodiment may be a pouch-type battery cell. Such a pouch-type battery cell may be formed by housing the electrode assembly in a pouch case of a laminated sheet containing a resin layer and a metal layer, and then heat-sealing a sealing portion of the pouch case. At this time, the battery cell 110 may be formed in a rectangular sheet-like structure.

Specifically, referring to Fig. 3, the battery cell 110 according to the present embodiment has a structure in which two electrode leads 111 and 112 face each other and protrude from one end 114a and the other end 114b of the cell main body 113, respectively. The battery cell 110 can be manufactured by joining both end parts 114a and 114b of the battery case 114 and one side part 114c connecting them, in a state in which the electrode assembly (not shown) is housed in a battery case 114. In other words, the battery cell 110 according to the present embodiment has a total of three sealing parts 114sa, 114sb and 114sc, the sealing parts 114sa, 114sb and 114sc have a structure sealed by a method such as heat fusion, and the remaining other side part may be formed of a connection part 115. Between both end parts 114a and 114b of the battery case 114 may be defined as the longitudinal direction of the battery cell 110, and between the one side part 114c and the connection part 115 connecting both end parts 114a and 114b of the battery case 114 may be defined as the width direction of the battery cell 110.

The connection part 115 is a region extending long along one edge of the battery cell 110, and a bat-ear 110p may be formed at the end of the connection part 115. The bat-ear 110p may be formed on at least one of both ends of the connection part 115, and may protrude in a direction perpendicular to the direction in which the connection part 115 extends. The bat-ear 110p may be located between one of the sealing parts 114sa and 114sb of both ends 114a and 114b of the battery case 114 and the connection part 115.

However, the battery cell 110 described above is an exemplary structure, and it goes without saying that a battery cell in which two electrode leads protrude in the same direction is also possible.

The battery cell 110 may be configured in plural numbers, and the plurality of battery cells 110 may be stacked so as to be electrically connected to each other, thereby forming a battery cell stack 120. For example, as shown in Fig. 2, a plurality of battery cells 110 may be stacked along a direction parallel to the x-axis. The battery case 114 is generally formed of a laminate structure of a resin layer/metallic thin film layer/resin layer. For example, a surface of the battery case 114 formed of an O(oriented)-nylon layer tends to slide easily by an external impact when a plurality of battery cells 110 are stacked to form a medium or large-sized battery module. Therefore, in order to prevent this sliding and maintain a stable stacked structure of the battery cells, an adhesive member, for example, a sticky adhesive such as a double-sided tape or a chemical adhesive coupled by a chemical reaction upon adhesion can be attached to the surface of the battery case to form the battery cell stack 120.

Referring to Fig. 2, the module frame 200 that houses the battery cell stack 120 may include an upper cover 220 and a U-shaped frame 210.

The U-shaped frame 210 may include a bottom part 210a and two side surface parts 210b extending upward from both ends of the bottom part 210a. The bottom part 210a may cover the lower surface of the battery cell stack 120, and the side surface part 210b may cover both side surfaces of the battery cell stack 120.

The upper cover 220 may be formed in a single plate-shaped structure that wraps the remaining upper surface (surface in z-axis direction) excluding the lower surface and the both side surfaces of the battery cell stack 120 wrapped by the U-shaped frame 210. The upper cover 220 and the U-shaped frame 210 can be joined by welding or the like in a state in which the corresponding corner portions are in contact with each other, thereby forming a structure that covers the battery cell stack 120 vertically and horizontally. It is possible to physically protect the battery cell stack 120 through the upper cover 220 and the U-shaped frame 210. For this purpose, the upper cover 220 and the U-shaped frame 210 may include a metal material having a predetermined strength.

Meanwhile, although not specifically shown in the figure, the module frame according to a modification of the present disclosure may be a metal plate-shaped mono frame in which the upper surface, the lower surface, and both side surfaces are integrated. That is, this may be a structure in which the upper surface, the lower surface, and both side surfaces are integrated by being manufactured by extrusion molding, rather than a structure in which the U-shaped frame 210 and the upper cover 220 are coupled with each other.

The battery module 100 according to the present embodiment may include an end plate 400. The end plate 400 may be located on the opened both sides (y-axis direction and -y-axis direction) of the module frame 200, so that it can be formed so as to cover the battery cell stack 120. That is, the two end plates 400 are located on the opened both sides of the module frame 200, so that they can be joined to the module frame 200 by welding or the like. The end plate 400 can physically protect the battery cell stack 120 and other electrical components from external impacts.

Next, a heat sink according to one embodiment of the present disclosure will be described in detail with reference to Figs. 2, 4 and 5.

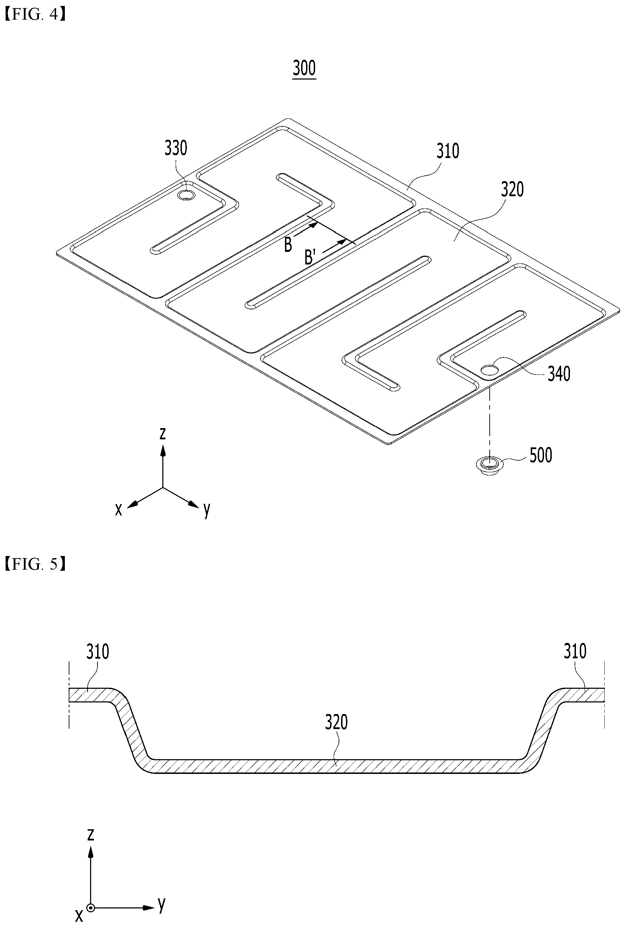

Fig. 4 is a perspective view showing a heat sink included in the battery module of Fig. 2. Fig. 5 is a cross-sectional view showing a cross section taken along the cutting line B-B' of Fig. 4.

Referring to Figs. 2, 4, and 5 together, the heat sink 300 according to the present embodiment is located below the module frame 200. More specifically, the heat sink 300 may be located below the bottom part 210a of the module frame 200. The bottom part 210a of the module frame 200 constitutes an upper plate of the heat sink 300, and the bottom part 210a of the module frame 200 and the heat sink 300 may form a refrigerant flow path.

Specifically, the heat sink 300 may include a lower plate 310 that forms the skeleton of the heat sink 300 and is directly joined to the bottom part 210a of the module frame 200 by welding or the like and a depressed part 320 that is depressed downward from the lower plate 310. Such a depressed part 320 become a path through which refrigerant flows.

The depressed part 320 of the heat sink 300 corresponds to a portion in which the lower plate 310 is depressed downward. The depressed part 320 may be a pipe having a U-shaped cross section cut along the xz plane or the yz plane perpendicular to the direction in which the refrigerant flow path extends, and the bottom part 210a may be located on the opened upper side of the U-shaped pipe. That is, as shown in Fig. 5, the upper part of the depressed part 320 may have an opened shape. A refrigerant flows between the bottom part 210a and the depressed part 320. That is, as the lower plate 310 of the heat sink 300 comes into contact with the bottom part 210a, the space between the depressed part 320 and the bottom part 210a becomes a region through which the refrigerant flows, i.e., a refrigerant flow path. Thereby, the bottom part 210a of the module frame 200 may be in direct contact with the refrigerant.

The manufacturing method of the depressed part 320 of the heat sink 300 is not particularly limited, but a U-shaped depressed part 320 having an opened upper side may be formed by providing a depressed structure for the plate-shaped heat sink.

Through holes 330 and 340 may be formed in the heat sink 300. More specifically, the through holes 330 and 340 may be formed in the depressed part 320 of the heat sink 300, wherein one of the through holes 330 and 340 may be an inlet port 330, and the other one may be the outlet port 340. A cooling port 500 may be connected to each of the through holes 330 and 340. The refrigerant supplied to the heat sink 300 through the cooling port 500 and the inlet port 330 moves along the depressed part 320 and is discharged through the outlet port 340 and the cooling port 500.

Meanwhile, as shown in Fig. 2, the thermal conductive resin layer 800 including a thermal conductive resin may be located between the bottom part 210a of the module frame 200 and the battery cell stack 120. The thermal conductive resin layer 800 can be formed by applying a thermal conductive resin to the bottom part 210a and then curing the applied thermal conductive resin. Particularly, heat generation is excessive in the portion adjacent to the electrode leads 111 and 112 (see Fig. 3) of the battery cell 110 of the battery cell stack 120, wherein the thermal conductive resin layer 800 may be formed so as to correspond to both parts of the battery cell stack 120 where heat generation is excessive.

The thermal conductive resin may include a thermal conductive adhesive material, and specifically, may include at least one of a silicone material, a urethane material, and an acrylic material. The thermal conductive resin is a liquid during application but is cured after application, so that it can perform the role of fixing one or more battery cells 110 constituting the battery cell stack 120. Further, since the thermal conductive resin has excellent heat transfer properties, it is possible to quickly transfer the heat generated in the battery module 110 to the lower side.

The battery module 100 according to the present embodiment realizes a cooling integrated structure of the module frame 200 and the heat sink 300 and thus can further improve the cooling performance. The bottom part 210a of the module frame 200 serves to correspond to the upper plate of the heat sink 300, thereby capable of realizing a cooling integrated structure.

The cooling efficiency increases due to direct cooling, and through a structure in which the heat sink 300 is joined to the bottom part 210a of the module frame 200, the space utilization rate of the battery module 100 and the battery pack 1000 to which the battery module 100 is mounted can be further improved.

Specifically, heat generated from the battery cell 110 can pass through a thermal conductive resin layer 800 located between the battery cell stack 120 and the bottom part 210a, the bottom part 210a of the module frame 200 and the refrigerant, and then can be transferred to the outside of the battery module 100. By removing the unnecessary cooling structure according to the conventional one, the heat transfer path can be simplified and an air gap between respective layers can be reduced, so that the cooling efficiency or performance can be enhanced. Particularly, since the bottom part 210a is configured as an upper plate of the heat sink 300, and the bottom part 210a directly contacts the refrigerant, which is thus advantageous in that more direct cooling through the refrigerant is possible.

Further, through the removal of the unnecessary cooling structure, the height of the battery module 100 is reduced and thus, the cost can be reduced and the space utilization rate can be increased. Furthermore, since the battery module 100 can be arranged in a compact manner, the capacity or output of the battery pack 1000 including a plurality of battery modules 100 can be increased.

Meanwhile, the bottom part 210a of the module frame 200 may be weld-joined to a portion of the lower plate 310 where the depressed part 320 is not formed in the heat sink 300. In the present embodiment, the cooling integrated structure of the bottom part 210a and the heat sink 300 not only improves the above-mentioned cooling performance but also can have the effect of supporting the load of the battery cell stack 120 housed in the module frame 200 and reinforcing the rigidity of the battery module 100. In addition, the lower plate 310 and the bottom part 210a of the module frame 200 are sealed through weld-coupling, and the like, so that in the depressed part 320 formed inside the lower plate 310, the refrigerant can flow without leakage.

For effective cooling, it is preferable that the depressed part 320 are formed over the entire area corresponding to the bottom part 210a of the module frame 200. For this purpose, the depressed part 320 may be bent at least once to extend from one side to the other. Particularly, in order for the depressed part 320 to form over the entire area corresponding to the bottom part 210a, the depressed part 320 is preferably bent several times as shown in Fig. 4. As the refrigerant moves from the start point to the end point of the refrigerant flow path formed over the entire region corresponding to the bottom part 210a of the module frame 200, efficient cooling can be performed over the entire region of the battery cell stack 120.

Meanwhile, the refrigerant is a medium for cooling, and is not particularly limited, but may be cooling water. That is, the battery pack 1000 according to the present embodiment may have a water-cooling type cooling structure.

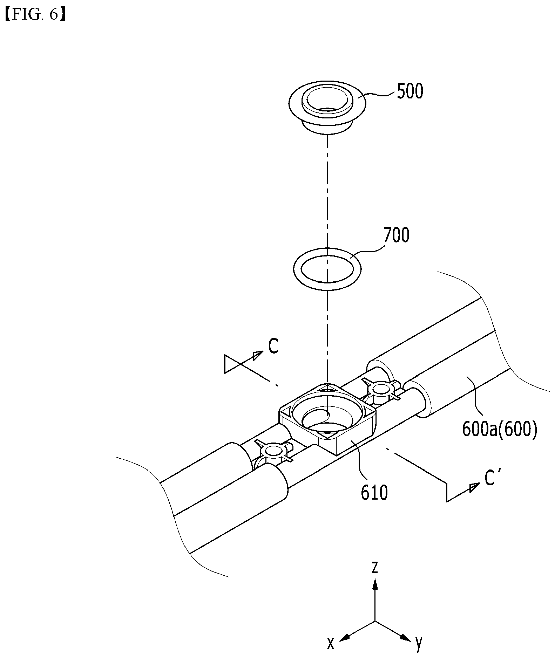

Next, a pack refrigerant pipe, a cooling port, and a cooling connector according to one embodiment of the present disclosure will be described in detail with reference to Figs. 6 to 9 and the like.

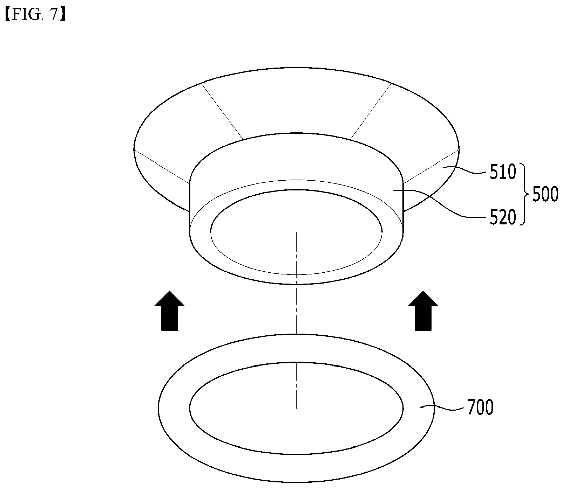

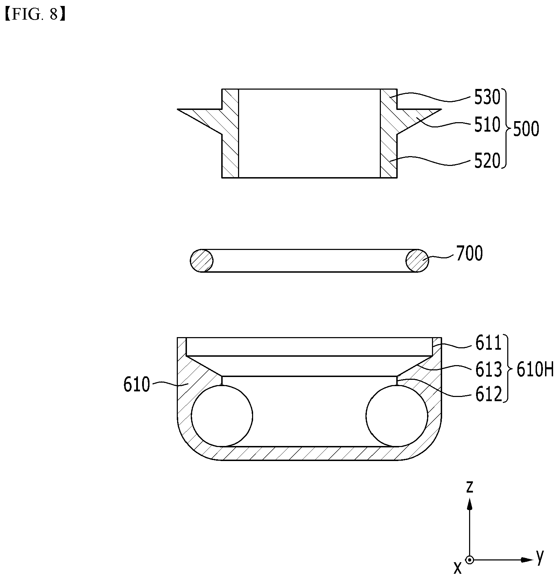

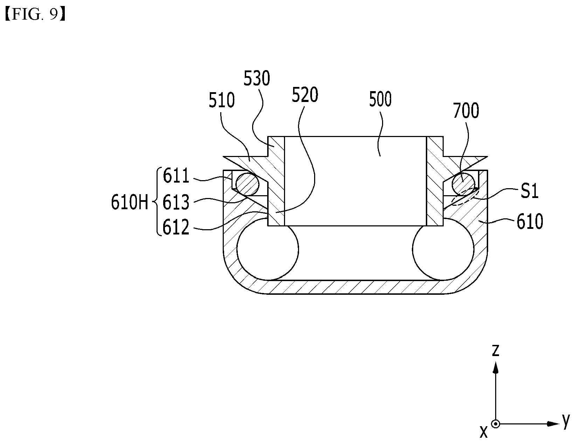

Fig. 6 is a partial perspective view which enlarges and shows a section "A" of Fig. 1. Fig. 7 is a perspective view showing a cooling port and a sealing member shown in Fig. 6. Figs. 8 and 9 are cross-sectional views taken along the cutting line C-C' of Fig. 6. Particularly, Fig. 8 shows a state before the cooling port 500, the sealing member 700 and the cooling connector 610 are assembled, and Fig. 9 shows a state in which the cooling port 500, the sealing member 700, and the cooling connector 610 are assembled.

First, referring to Figs. 1, 4, 6 and 7, the battery pack 1000 according to the present embodiment includes a pack refrigerant pipe 600 through which refrigerant flows, a cooling port 500 connected to the through holes 330 and 340 formed in the heat sink 300, and a cooling connector 610 that connects the pack refrigerant pipe 600 and the cooling port 500.

According to the present embodiment, the pack refrigerant pipe 600 may include a pack refrigerant supply pipe 600a and a pack refrigerant discharge pipe 600b. Although not specifically illustrated, each of the pack refrigerant supply pipe 600a and the pack refrigerant discharge pipe 600b is connected to a refrigerant circulation device to supply the refrigerant to the heat sink 300 of the battery module 100 or to discharge the refrigerant from the heat sink 300.

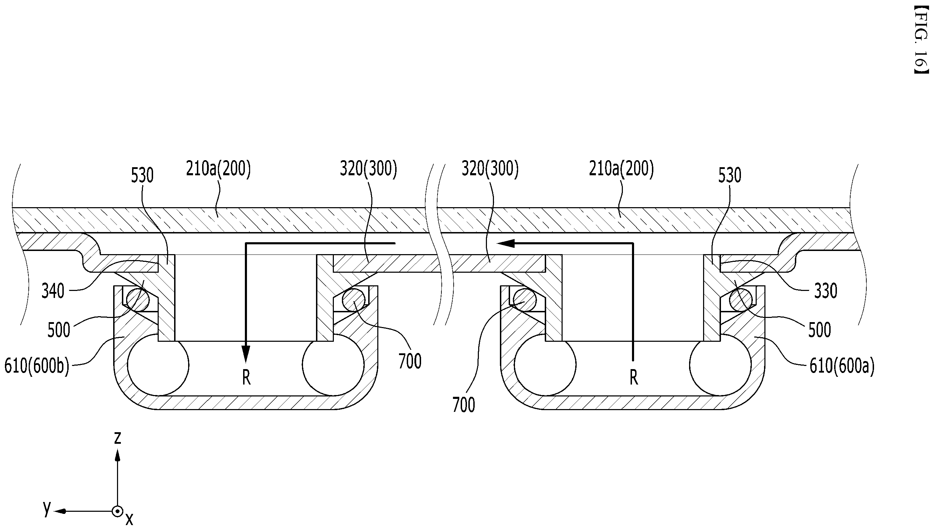

The cooling port 500 connected to the inlet port 330 is connected to the pack refrigerant supply pipe 600a, and the cooling port 500 connected to the outlet port 340 is connected to the pack refrigerant discharge pipe 600b. The refrigerant flowing along the pack refrigerant supply pipe 600a moves to the depressed part 320 of the heat sink 300 through the inlet port 330. The refrigerant flowing along the depressed part 320 is discharged to the pack refrigerant discharge pipe 600b through the outlet port 340. The refrigerant circulation structure is formed in this way. The refrigerant circulation structure will be described in detail again with reference to Fig. 16 below.

Referring to Figs. 6 to 9, the cooling port 500 according to the present embodiment has a structure in which a passage is formed so as to allow the refrigerant to flow therein, and includes an inclination part 510 formed on the outer peripheral surface of the cooling port 500. The width in a horizontal direction of the inclination part 510 becomes narrower it goes in the direction in which the cooling connector 610 is located. Here, the horizontal direction is a direction parallel to the ground surface, and means a direction parallel to the xy plane in Fig. 1 or Fig. 9. That is, on the basis of the cross-sectional shape as shown in Fig. 9, the outer surface of the inclination part 510 has an oblique inclination rather than a vertical shape. That is, the inclination part 510 according to the present embodiment may have a truncated cone-shaped inclined surface.

A ring-shaped sealing member 700 is located between the inclination part 510 and the cooling connector 610. The sealing member 700 is an O-ring shaped member, and prevents leakage of refrigerant between the cooling port 500 and the cooling connector 610.

Meanwhile, the cooling connector 610 according to the present embodiment may include an opening 610H into which the cooling port 500 and the sealing member 700 are inserted. The cooling connector 610 is connected to the pack refrigerant pipe 600 and may include an opening 610H of which one side is opened so that the cooling port 500 and the sealing member 700 can be inserted. The space inside the pack refrigerant pipe 600 through which a refrigerant flows may be connected to the passage inside the cooling port 500 by the opening 610H. A refrigerant can pass through the passage inside the cooling port 500.

At this time, as shown in Fig. 9, a sealing member 700 may be located between the inner surface of the opening 610H and the outer surface of the inclination part 510. Specifically, the opening 610H may include an inclination passage part 613 to which the sealing member 700 contacts. The inner diameter of the inclination passage part 613 may decrease as it goes in a downward direction so as to correspond to the inclination part 510 of the cooling port 500. Here, the downward direction may be a direction in which the cooling connector 610 is located with respect to the cooling port 500. That is, it may correspond to the -z-axis direction in Figs. 8 and 9.

Further, the cooling port 500 according to the present embodiment may further include a lower end 520 and an upper end 530. The inclination part 510 described above may be located between the lower end 520 and the upper end 530. On the basis of the inclination part 510, the lower end 520 may be located at the side near the cooling connector 610, and the upper end 530 may be located at the side far from the cooling connector 610.

The lower end 520 and the upper end 530 may have a constant width in the horizontal direction, unlike the inclination part 510. That is, the lower end 520 and the upper end 530 may have a cylindrical outer peripheral surface, not a truncated cone.

Meanwhile, the cooling connector 610 according to the present embodiment may further include a first passage part 611 and a second passage part 612. The above-mentioned inclination passage part 613 may be formed between the first passage part 611 and the second passage part 612. On the basis of the inclination passage part 613, the first passage part 611 may be located at the side near the cooling port 500, and the second passage part 612 may be located at the side far from the cooling port 500.

Unlike the inclination passage part 613, the first passage part 611 and the second passage part 612 may have a constant inner diameter even when going downward. However, considering the shape of the inclination passage part 613, the inner diameter of the first passage part 611 may be larger than the inner diameter of the second passage part 612.

As shown in Figs. 7, 8 and 9, the diameter of the lower end 520 of the cooling port 500 is designed to match with or be slightly smaller than the inner diameter of the second passage part 612 of the cooling connector 610, so that the lower end 520 is inserted into the second passage part 612. Further, the sealing member 700 may be located between the outer peripheral surface of the inclination part 510 of the cooling port 500 and the inner surface of the inclination passage part 613. The cooling port 500 and the sealing member 700 are inserted into the opening 610H of the cooling connector 610 in this way, so that the cooling port 500 and the cooling connector 610 can be connected.

Taken together, when the cooling port 500 and the cooling connector 610 are connected to each other, the sealing member 700 for preventing leakage of the refrigerant cany be mounted and fixed between the inclination part 510 of the cooling port 500 and the opening 610H of the cooling connector 610, particularly, the inclination passage part 613. In other words, in the present embodiment, the cooling port 500 and the cooling connector 610 are provided respectively in the inclination part 510 having a truncated cone-shaped inclined surface and the inclination passage part 613 configured to correspond thereto to provide a space in which the sealing member 700 is mounted.

The inclination part 510 and the inclination passage part 613 have a wide support surface for supporting the sealing member 700 relative to their height, so that the cooling port 500 can be stably mounted. Particularly, the sealing surface S1 where the sealing member 700 and the inclination passage part 613 contact with each other can be designed to be wide relative to the height of the cooling port 500, whereby it is possible to prevent the cooling port 500 from departing in the left and right direction during external vibration or impact. That is, the breakage of the cooling port 500 due to an external impact or a disconnection between the cooling port 500 and the cooling connector 610 is prevented.

Meanwhile, referring to Figs. 4, 8 and 9 together, the upper end 530 of the cooling port 500 may be inserted into the through holes 330 and 340 formed in the depressed part 320 of the heat sink 300. Thereby, the cooling port 500 and the through-holes 330 and 340 of the heat sink 300 may be connected to each other.

Next, the advantages of the cooling port and the cooling connector according to the present embodiment will be described in detail in comparison with the comparative example of the present disclosure.

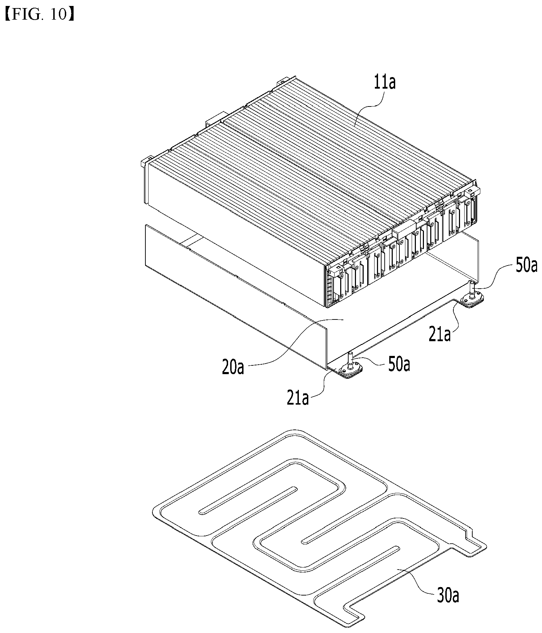

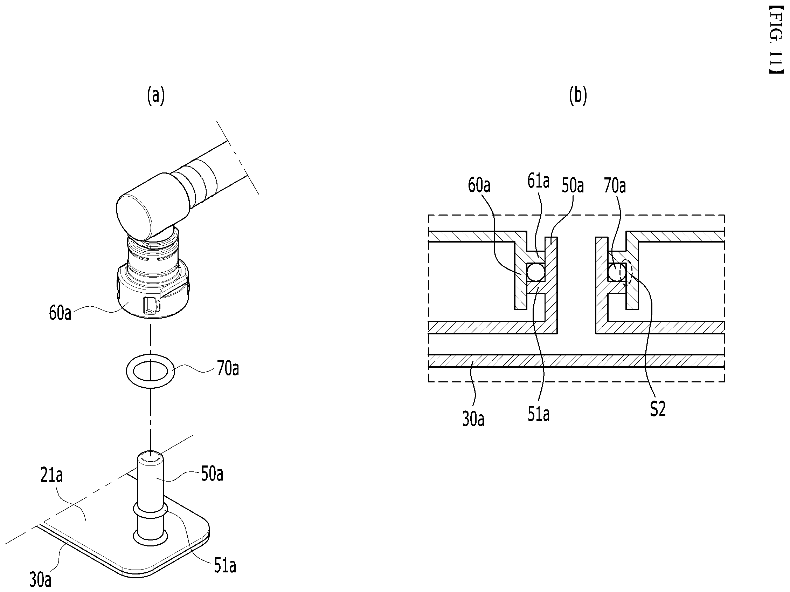

Fig. 10 is a perspective view of a battery module having a cooling port with a vertical sealing structure according to a comparative example of the present disclosure. Figs. 11(a) and (b) are a perspective view and a cross-sectional view which show a connection form between a cooling port having a vertical sealing structure and a cooling connector according to a comparative example of the present disclosure. Particularly, Fig. 11(a) is a diagram which enlarges and shows the cooling connector 60a that is inserted into the cooling port 50a, and Fig. 11(b) is a cross-sectional view which schematically shows a connection form between the cooling port 50a and the cooling connector 60a of Fig. 11(a).

Referring to Fig. 10 and Figs. 11(a) and (b), the battery module according to the comparative example of the present disclosure includes battery cells 11a, a module frame 20a that houses the battery cells 11a, and a heat sink 30a located under module frame 20a. At this time, the module frame 20a may include two module frame extension parts 21a protruding in one direction, and cooling ports 50a may be respectively located on the module frame extension parts 21a. These cooling ports 50a are configured to supply the refrigerant to the inside of the heat sink 30a or to discharge the refrigerant from the heat sink 30a. The cooling port 50a has a shape protruding in a vertical direction. A cooling connector 60a may be connected to the cooling port 50a to supply or discharge refrigerant through the cooling port 50a. The cooling connector 60a is connected to the pack refrigerant pipe, and the cooling port 50a and the cooling connector 60a are connected so that the cooling port 50a is inserted into the cooling connector 60a.

At this time, protrusions 51a and 61a can be provided so that the sealing member 70a can be mounted to the outer periphery of the cooling port 50a and the inner periphery of the cooling connector 60a. Unlike those shown in the figure, the protrusions may be provided only on the outer periphery of the cooling port 50a. An O-ring-shaped sealing member 70a can be fixed between the protrusions 51a and 61a.

In this case, since it is essential to secure the height of the sealing member 70a itself and secure the height of the protrusions 51a and 61a for fixing the sealing member 70a, the cooling port 50a should have a certain height or more. Since the cooling port 50a with such a structure has a highly rising shape as compared to the supporting portion, it is vulnerable to external vibrations or impacts, especially in the left and right directions. That is, there is a high risk of damage due to movement on a plane in the left and right directions. The sealing surface S2 is associated with the height of the cooling port 50a, but due to the risk of damage to the cooling port 50a as described above, the cooling port 50a cannot be designed to be too high, and thus, the enlargement of the sealing surface S2 is limited.

Unlike the same, the cooling port 500 and the cooling connector 610 according to the present embodiment shown in Figs. 6 to 9 are configured such that the sealing member 700 is arranged between the inclination part 510 and the inclination passage part 613, and thus are excellent in structural stability as compared to the cooling port 50a according to the comparative example. Specifically, the sealing surface S1 where the sealing member 700 and the inclination passage part 613 contact is formed wide, whereas the height of the cooling port 500 may be made relatively low. It is structurally more stable that the cooling port 50a that has to be highly rising as compared to the supporting portion. In particular, since the cooling port 500 can flow somewhat flexibly in the left and right directions, it is less likely to be damaged by a force in the left and right directions, unlike the cooling port 50a according to the comparative example. Further, since the height can be made relatively low compared to the cooling port 50a, it requires less space in the height direction, which is also advantageous in terms of space utilization.

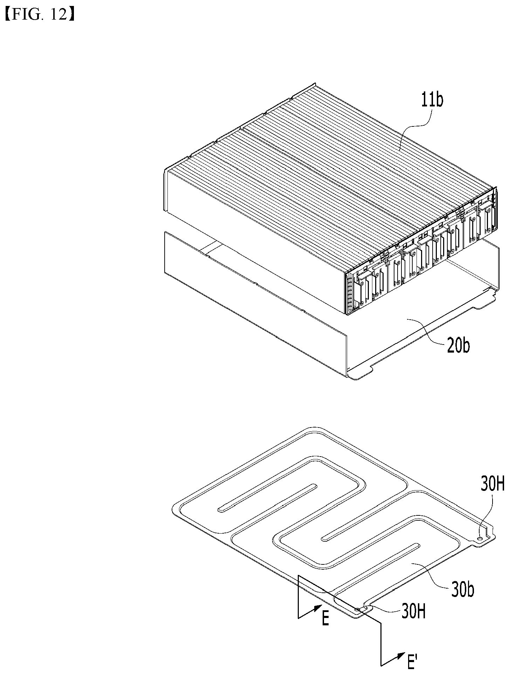

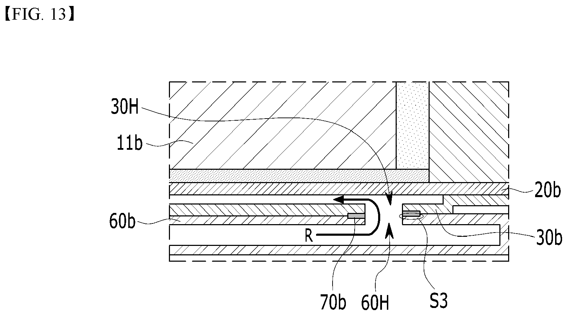

Fig, 12 is a perspective view of a battery module having a heat sink with a horizontal sealing structure according to a comparative example of the present disclosure. Fig. 13 is a cross-sectional view showing a cross section taken along the cutting line E-E' of Fig. 12. At this time, Fig. 13 assumes and shows that the pack refrigerant pipe 60b is arranged under the heat sink 30b.

Referring to Figs. 12 and 13, a battery module according to another comparative example of the present disclosure includes battery cells 11b, a module frame 20b that houses the battery cells 11b and a heat sink 30b located under module frame 20b.

A through hole 30H is formed in the heat sink 30b, and a through hole 60H is also formed in the pack refrigerant pipe 60b located below the heat sink 30b. The through hole 30H of the heat sink 30b and the through hole 60H of the pack refrigerant pipe 60b are arranged and connected so as to face each other, and an O-ring-shaped sealing member 70b is arranged between the heat sink 30b and the pack refrigerant pipe 60b so as to surround the through holes 30H and 60H. The refrigerant R can flow into the heat sink 30b through the through hole 30H of the heat sink 30b and the through hole 60H of the pack refrigerant pipe 60b or be discharged from the heat sink 30b.

In the case of the structure as described above, the height can be formed low, which is advantageous in terms of space utilization, but it is vulnerable to external vibrations or impacts, especially in the left and right directions.

Since the sealing surface S3 is configured to be parallel to the ground surface, the sealing surface S3 does not perform the buffering function against vibration or impact in the left and right directions. Therefore, it is vulnerable to vibrations or impacts in the left and right directions, and there is a high possibility that the sealing member 70b is detached in the left-right direction. In addition, there is a high possibility that the through hole 30H of the heat sink 30b and the through hole 60H of the pack refrigerant pipe 60b are displaced from each other.

Unlike the same, the cooling port 500 and the cooling connector 610 according to the present embodiment shown in Figs. 6 to 9 have a configuration in which the sealing member 700 is arranged between the inclination part 510 and the inclination passage part 613, so that the sealing member 700 is seated on the sealing surface S 1 having an inclination. The space in the height direction can be taken low to some extent and, at the same time, it can exert the buffering action against vibrations or impacts in the left and right directions, which is thus structurally stable. That is, it has the advantage of ensuring both space utilization and structural stability as compared to the connection form between the heat sink 30b and the pack refrigerant pipe 60b shown in Figs. 12 and 13.

Further, in the case of a high-weight, large-area battery module in which the number of battery cells is greater than that of the conventional one in order to increase capacity, it is not easy to confirm the assembly surface in the process of assembling parts. Particularly, in the case of the arrangement structure of the sealing member 70b as shown in Fig. 13, the assembly surface or the position where the sealing member 70b is arranged is not easily confirmed, and thus the assembly may not be performed properly. Finally, the sealing member 70b may deviate from the designed position, and the sealing function may not be properly performed.

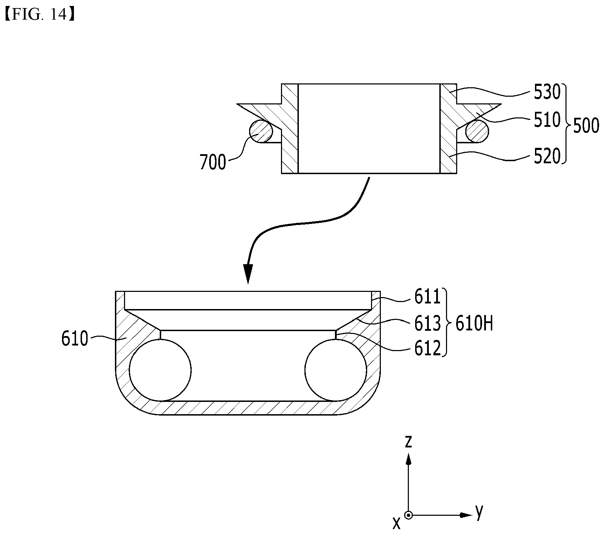

Meanwhile, the cooling port 500 and the cooling connector 610 according to the present embodiment shown in Figs. 6 to 9 will be described later with reference to Fig. 14 below, but the inclination part 510 and the inclination passage part 613 may function as a kind of assembly guide during the assembly process of the cooling port 500. Since the assembling property is improved in this way, the cooling port 500 and the sealing member 700 can be properly assembled to the cooling connector 610 even if blind assembly is performed.

Next, a process of inserting the cooling port 500 according to the present embodiment will be described in detail with reference to Fig. 14.

Fig. 14 is a cross-sectional view which schematically shows a state in which a cooling port is inserted into a cooling connector according to an embodiment of the present disclosure.

Referring to Figs. 8, 9 and 14 together, the inclination part 510 of the cooling port 500 according to the present embodiment has a truncated cone-shaped inclined surface, and the inclination passage part 613 of the cooling connector 610 is configured to correspond to the inclined surface, whereby in the process of inserting the cooling port 500 into the opening 610H of the cooling connector 610, the inclination part 510 may function as a kind of assembly guide Although not specifically illustrated in Fig. 14, the upper end 530 of the cooling port 500 is in a state inserted into the through holes 330 and 340 of the heat sink 300.

Particularly, the battery module 100 according to the present embodiment may be a large-area battery module in which the number of battery cells 110 is greatly increased compared to the conventional one, for securing capacity and simplifying parts, The number is not limited, but may include 32 to 48 battery cells per one battery module. Although the volume and weight of one battery module 100 increases, the battery modules 100 are located on the pack refrigerant pipe 600 as shown in Fig. 1, so that the battery module 100 and the pack refrigerant pipe 600 are assembled with each other.

In order to assemble the cooling port 500 of the battery module 100 and the cooling connector 610 connected to the pack refrigerant pipe 600 with each other, the cooling port 500 is inserted into the opening 610H of the cooling connector 610. However, due to the increased volume of the battery module 100, it is difficult to confirm the assembly process, and blind assembly may be performed.

At this time, as shown in Fig. 14, even if the cooling port 500 and the sealing member 700 are inserted with a slight deviation to the cooling connector 610, the inclination part 510 functions as a kind of assembly guide, so that the cooling port 500 can be correctly inserted into the opening 610H of the cooling connector 610. Finally, the lower end 520 of the cooling port 500 is inserted into the second passage part 612 of the cooling connector 610, so that the cooling port 500 can be finally coupled and fixed with the cooling connector 610.

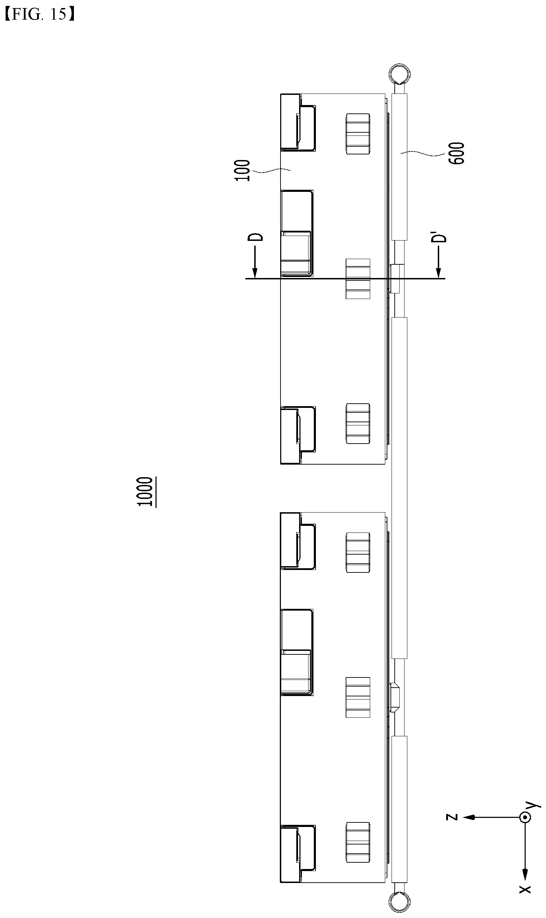

Next, a refrigerant circulation structure in the battery pack 1000 according to the present embodiment will be described in detail with reference to Figs. 15 and 16.

Fig. 15 is a plan view showing the battery pack of Fig. 1 as viewed along the -y axis on the xz plane. Fig. 16 is a partial cross-sectional view showing a part of the cross section taken along the cutting line D-D' of Fig. 15.

Referring to Figs. 1, 4, 6, 15 and 16 together, as described above, the battery pack 1000 according to the present embodiment may include a pack refrigerant pipe 600 through which a refrigerant flows, and the pack refrigerant pipe 600 may include a pack refrigerant supply pipe 600a and a pack refrigerant discharge pipe 600b.

The cooling port 500 is configured in plural number to be connected to each of the inlet port 330 and the outlet port 340 formed in the heat sink 300. The cooling connectors 610 may also be configured in plural numbers to be connected to each of the cooling ports 500.

Specifically, the upper end 530 of any one of the cooling ports 500 is inserted and connected to the inlet port 330 of the heat sink 300, and such cooling port 500 is inserted into the cooling connector 610 connected to the pack refrigerant supply pipe 600a.

Meanwhile, the upper end 530 of the other cooling port 500 is inserted and connected to the outlet port 340 of the heat sink 300, and such cooling port 500 is inserted into the cooling connector 610 connected to the pack refrigerant discharge pipe 600b.

As shown in Fig. 16, the refrigerant R flowing along the pack refrigerant supply pipe 600a sequentially passes through one of the cooling connectors 610, one of the cooling ports 500 and the inlet port 330 to flow into the inside of the heat sink 300 , that is, the space between the bottom part 210a and the depressed part 320.

The refrigerant flowing along the path formed by the depressed part 320 (see Fig. 4) sequentially passes through the outlet port 340 , the other one of the cooling ports 500 and the other one of the cooling connectors 610 to be discharged to the pack refrigerant discharge pipe 600b. In this manner, a refrigerant circulation structure between the pack refrigerant pipe 600 and the heat sink 300 of the battery module 100 is formed in the battery pack 1000.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS(battery management system), a BDU(battery disconnect unit), and a cooling system to form a battery pack.

The battery module or the battery pack can be applied to various devices. For example, it can be applied to vehicle means such as an electric bike, an electric vehicle, and a hybrid electric vehicle, and may be applied to various devices capable of using a secondary battery, without being limited thereto.

Although the preferred embodiments of the present disclosure has been shown and described above, the scope of the present disclosure is not limited thereto, and numerous changes and modifications can be devised by those skilled in the art using the principles of the invention defined in the appended claims, which also falls within the spirit and scope of the present disclosure.

### [Description of Reference Numerals]

- 100:: battery module
- 300:: heat sink
- 500:: cooling port
- 510:: inclination part
- 600:: pack refrigerant pipe
- 610:: cooling connector
- 613:: inclination passage part
- 1000:: battery pack

## Claims

1. A battery pack comprising:
a battery module that includes a battery cell stack in which a plurality of battery cells are stacked, a module frame that houses the battery cell stack and a heat sink located below the module frame;
a pack refrigerant pipe through which a refrigerant flows;
a cooling port that is connected to a through hole formed in the heat sink; and
a cooling connector that connects the pack refrigerant pipe and the cooling port,
wherein the cooling port includes an inclination part formed on an outer peripheral surface of the cooling port,
wherein a width in a horizontal direction of the inclination part becomes narrowed as it goes in the direction in which the cooling connector is located, and
wherein a ring-shaped sealing member is located between the inclination part and the cooling connector.

2. The battery pack according to claim 1 wherein:
the inclination part has a truncated cone-shaped inclined surface.

3. The battery pack according to claim 1 wherein:
the cooling connector includes an opening into which the cooling port and the sealing member are inserted.

4. The battery pack according to claim 3 wherein:
the sealing member is located between the inner surface of the opening and the outer peripheral surface of the inclination part.

5. The battery pack according to claim 4 wherein:
the opening includes an inclination passage part with which the sealing member contacts.

6. The battery pack according to claim 5 wherein:
the inclination passage part becomes smaller in inner diameter as it goes toward the lower side so as to correspond to the inclination part.

7. The battery pack according to claim 5 wherein:
the sealing member is located between the inner surface of the inclination passage part and the outer peripheral surface of the inclination part.

8. The battery pack according to claim 1 wherein:
the through hole includes an inlet port and an outlet port, and
the cooling port is configured in plural numbers to be connected to the inlet port and the outlet port, respectively.

9. The battery pack according to claim 8 wherein:
the pack refrigerant pipe includes a pack refrigerant supply pipe and a pack refrigerant discharge pipe.

10. The battery pack according to claim 9 wherein:
the cooling connector is configured in plural numbers to be connected to the cooling ports, respectively, and
the refrigerant flowing along the pack refrigerant supply pipe passes through one of the cooling connectors, one of the cooling ports, and the inlet port to be flowed into the heat sink.

11. The battery pack according to claim 10 wherein:
the refrigerant passes through the outlet port, the other one of the cooling ports, and the other one of the cooling connectors to be discharged to the pack refrigerant discharge pipe.

12. The battery pack according to claim 1 wherein:
the heat sink includes a lower plate joined to the bottom part of the module frame and a depressed part recessed downward from the lower plate.

13. The battery pack according to claim 12 wherein:
the through hole is formed in the depressed part.

14. The battery pack according to claim 12 wherein:
the refrigerant flows between the bottom part and the depressed part.

15. A device comprising the battery pack as set forth in claim 1.
